Europäisches Patentamt

European Patent Office

Office européen des brevets

(19)

(11) Veröffentlichungsnummer: **0 002 654**
**B1**

(12) **EUROPÄISCHE PATENTSCHRIFT**

(45) Veröffentlichungstag der Patentschrift: **20.01.82**

(51) Int. Cl.³: **F 16 B 13/10**

(21) Anmeldenummer: **78100076.5**

(22) Anmeldetag: **02.06.78**

(54) Dübel zur formschlüssigen Befestigung in einer hinterschnittenen Bohrung.

(30) Priorität: **24.12.77 DE 2758091**
**02.05.78 DE 2819289**

(43) Veröffentlichungstag der Anmeldung:
**11.07.79 Patentblatt 79/14**

(45) Bekanntmachung des Hinweises auf die Patenterteilung:
**20.01.82 Patentblatt 82/3**

(84) Benannte Vertragsstaaten:
**BE CH FR GB NL SE**

(56) Entgegenhaltungen:
**DE - A - 2 406 207**
**DE - A - 2 641 442**
**DE - A - 2 718 147**
**FR - A - 1 062 318**
**FR - A - 2 307 171**
**FR - A - 2 346 591**
**GB - A - 566 609**
**US - A - 3 403 594**

(73) Patentinhaber: **Liebig, Heinrich**
**Wormser Strasse 23**
**D-6102 Pfungstadt (DE)**

(72) Erfinder: **Liebig, Heinrich**
**Wormser Strasse 23**
**D-6102 Pfungstadt (DE)**

(74) Vertreter: **Helber, Friedrich G., Dipl.-Ing. et al,**
**Giesser Weg 47**
**D-6144 Zwingenberg (DE)**

Dübel zur formschlüssigen Befestigung in einer
hinterschnittenen Bohrung

Die Erfindung betrifft einen Dübel zur formschlüssigen Befestigung in einer Bohrung in einem Untergrund, wobei die als zylindrische Sackbohrung ausgeführte Bohrung mit Abstand von ihrer Mündung im Untergrund mit einer eine Hinterschnittfläche aufweisenden Erweiterung versehen ist, und der Dübel ein dem Durchmesser der Bohrung im wesentlichen entsprechendes, in die Bohrung einführbares und am bohrungsinneren Ende eines langgestreckten Befestigungsbolzens angeordnetes Kopfstück relativ geringer Höhe aufweist, auf dem die bohrungsinneren Enden von Riegelelementen schwenkbar gehaltert sind, deren zur Bohrungsmündung rückwärts weisende Enden von einer innerhalb des Durchmessers der Bohrung liegenden Lage in eine Lage verschwenkbar sind, in welcher sie zumindest teilweise über den Durchmesser des Kopfstücks vorstehen und an der Hinterschnittfläche der Bohrung verriegelnd angreifen, wobei der an seinem äußeren Ende einen Schraubenkopf oder eine auf ein Gewinde des Befestigungsbolzens aufgeschraubte Mutter tragende Befestigungsbolzen einen zwischen die zur Bohrungsmündung weisenden Enden der Riegelelemente eingreifenden, sich zum Bohrungsinnern konisch verjüngenden Bauteil aufweist, so daß bei einer Verschiebung des Kopfstücks in Richtung zur Bohrungsmündung die zur Bohrungsmündung weisenden Enden der Riegelelemente zwangsläufig radial nach außen verschwenkt werden.

Es ist eine Befestigungsanordnung bekannt (DE—A 25 35 066), bei welcher der Dübel eine in die Bohrung einsetzbare schwere Hülse aufweist, die im Bereich ihres bohrungsinneren Endes mit Ausnehmungen versehen ist, in denen flügelartige Riegelelemente angeordnet sind, die von einer Feder in die ausgeschwenkte Lage vorgespannt sind, in welcher ihre zur Bohrungsmündung weisenden rückwärtigen Enden die Hinterschnittfläche der Bohrung zu hintergreifen vermögen. Vor dem Einführen dieses Dübels in die zugehörige Bohrung werden die Riegelelemente von einem Ring in der eingeschwenkten Lage gehalten, wobei der Ring so auf der Außenseite der Riegelelemente angeordnet ist, daß er beim Einschieben des Dübels in die Bohrung von den Riegelelementen heruntergeschoben wird. Alternativ hierzu sind auch Ausgestaltungen des Dübels bekannt, bei denen radial verschieblich in Ausnehmungen der Hülse geführte Riegelelemente durch einen Nocken oder Spreizkörper aus der innerhalb des Bohrungsdurchmessers befindlichen zurückgezogenen Stellung in die vorgeschobenen Verriegelungsstellungen verstellbar sind. Zur Verriegelung muß dann ein spezielles Werkzeug in den Dübel eingeführt werden, mit dem der Nocken oder Spreizkörper gedreht wird. Zur Befestigung von Werkstücken weisen diese bekannten Dübel in ihrem der Bohrungsmundung zugewandten Ende ein Innengewinde auf, in welches das Werk-stück haltende Schrauben eingedreht werden können. In jeden Falle muß bei den bekannten aber so verfahren werden, daß zunächst der Dübel in der vorbereiteten mit Hinterschnitt versehenen Bohrung gesetzt wird, worauf das Werkstück in der vorgesehenen Lage über der Bohrung aufgesetzt und dann die eigentliche Befestigungsschraube durch die Befestigungsbohrung des Werkstücks in den Dübeln eingeführt und festgeschraubt wird. Diese Verfahrensweise ist nicht nur aufwendig, sondern hat auch den Nachteil, daß vor der Befestigung des Werkstücks sorgfältig kontrolliert werden muß, ob alle vorgesehenen Bohrungen auch wirklich mit einem Dübel versehen sind. Wenn nämlich versehentlich in einer oder mehreren Bohrungen kein Dübel gesetzt ist, muß das möglicherweise bereits mit mehreren Schrauben befestigte Werkstück wieder abgenommen und nach Setzen der fehlenden Dübel erneut befestigt werden.

Dabei kann es—ebenso wie bei den bekannten kraftschlüssig, durch Aufspreizung von Spreizelementen an die zylindrische Bohrungswandung festlegbaren Dübeln (FR—A 10 62 318)—zu Schwierigkeiten dann kommen, wenn sich der Dübel bei dem Versuch, die Riegelelemente in die Eingriffsstellung an der Hinterschnittfläche zu bringen, insgesamt dreht, weil dann keine hinreichende Kraft zum Verschwenken der Riegelelemente erzeugt wird.

Demgegenüber liegt der Erfindung die Aufgabe zugrunde, eine Befestigungsanordnung mit einem in Durchsteckmontage formschlüssig und spreizdruckfrei an einer Hinterschnittfläche einer Bohrung setzbaren Dübel zu schaffen, bei welcher die Möglichkeit, daß der in die Bohrung eingeführte Dübel sich beim Setzvorgang insgesamt dreht und dadurch Schwierigkeiten beim Ausschwenken der Riegelelemente entstehen, vermieden ist.

Ausgehend von einer Befestigungsanordnung der eingangs erwähnten Art wird diese Aufgabe erfindungsgemäß dadurch gelöst, daß sich die Riegelelemente in der nicht ausgeschwenkten Einführstellung zu einer, den Befestigungsbolzen umschließenden dickwandigen zylindrischen Hülse ergänzen, und daß das Kopfstück an der Wandung der Bohrung angreifende Einrichtungen zur Verhinderung einer Verdrehung in der Bohrung beim Setzen des Dübels aufweist.

Die Einrichtungen zur Verhinderung der Verdrehung werden vorzugsweise von einem auf einer Eindrehung des Kopfstücks angeordneten Ring mit sternartig radial von ihm vortretenden elastisch verformbaren Haltekrallen gebildet, wobei sich dann die Herstellung des Rings einschließlich der Haltekrallen aus Kunststoff anbietet, da dann eine preiswerte Herstellung im Kunststoff-Spritzgußverfahren möglich ist.

Alternativ können dagegen auch aus federelastischem Metallblech ausgestanzte, den für die Schraubensicherung verwendeten Sternscheiben ähnliche Elemente oder aus elastischem Draht mit vorspringenden Enden hergestellte Drehsicherungen vorgesehen werden.

Der sich konisch verjüngende Bauteil wird vorzugsweise von dem sich konisch verjüngenden bohrungsinneren Ende einer langgestreckten, längsverschieblich auf dem Befestigungsbolzen aufgesetzten Hülse gebildet, deren Länge etwa gleich dem Abstand des Hinterschnitts der Bohrung von der Oberseite des zu befestigenden Werkstücks zuzüglich des zum Ausschwenken der Riegelelemente erforderlichen Spannwegs bemessen ist. Da die Länge der Hülse von der Tiefe der Hinterschnittfläche in der Bohrung und der Dicke des zu befestigenden Werkstücks abhängt, ist es empfehlenswert, zur Herstellung der Hinterschnittbohrung ein Werkzeug zu verwenden, welches einen auf die erforderliche Tiefe der Hinterschnittfläche eingestellten oder einstellbaren Tiefenanschlag aufweist, wobei zur Berücksichtigung der Werkstückdicke das Aufbohren der Hinterschnittfläche zweckmäßigerweise bei angesetztem Werkstück oder—falls das Werkstück zu schwer oder sperrig ist—mit einer der Werkstückdicke entsprechenden Distanzhülse erfolgt.

In einer alternativen Ausführungsform der Erfindung wird der sich konisch verjüngende Bauteil von einem konischen Abschnitt des Befestigungsbolzens selbst gebildet, dessen sich an den konischen Abschnitt zur Bohrungsmündung hin anschließender Schaft einen im wesentlichen dem Durchmesser der Bohrung entsprechenden bzw. nur geringfügig kleineren Durchmesser hat. Dadurch wird in dem kritischen, auf Scherung beanspruchten Bereich des Befestigungsbolzens eine große Querschnittsfläche zur Verfügung gestellt.

Es empfiehlt sich, den Befestigungsbolzen zumindest an seinem bohrungsinneren Ende mit Gewinde zu versehen und in ein komplementäres Gegengewinde des Koptstücks einzuschrauben. Die wirksame Bolzenlänge kann damit in gewissem Umfange verändert werden und—bei Verwendung eines Befestigungsbolzens mit festem Schraubenkopf—dient die Gewindeverbindung zur Erzeugung des Anzuges des Kopfstücks beim Aufspreizen der Riegelelemente.

Wenn auf dem äußeren Ende des Befestigungsbolzens eine auf ein Gewinde des Befestigungsbolzens geschraubte Mutter vorgesehen ist, empfiehlt es sich, die Länge des Gewindes des Befestigungsbolzens wenigstens gleich, vorzugsweize länger als den zum Spreizen der Riegelelemente erforderlichen Spannweg zu bemessen.

Bei der Ausführungsform mit auf dem Befestigungsbolzen aufgesetzter Hülse kann der Befestigungsbolzen jedoch auch als Gewindebolzen mit durchgehendem Gewinde ausgebildet sein. In beiden Fällen empfiehlt es sich dann, in der äußeren Stirnfläche des Gewindebolzens einen Schraubenzieherschlitz zum Ansetzen eines Schraubenziehers o.dgl. Werkzeug vorzusehen.

In die der Bohrungswandung zugewandten Außenseiten der Riegelelemente ist in einer Weiterbildung des erfindungsgemäßen Dübels eine umlaufende Radialnut eingestochen, in der ein die Riegelelemente in der eingeschwenkten Lage haltender aufweitbarer Ring angeordnet ist, wobei der Ring entweder ein geschlossener Ring aus gummielastischem Material oder vorzugsweise ein geschlitzter Ring aus Federstahldraht sein kann.

Die Abstützung der Riegelelemente auf dem Kopfstück kann dadurch erfolgen, daß jedes Riegelelemente an seinem am Kopfstück gehalterten Vorderende wenigstens einen Vorsprung aufweist, der in eine passende Vertiefung im Kopfstück eingreift und so eine Verdrehung des Riegelelements relativ zum Kopfstück in Umfangsrichtung verhindert, während die Verschwenkung der dem Kopfstück abgewandten Enden des Riegelelements nicht behindert wird. Alternativ können an jedem Riegelelement auch zwei dann vorzugsweise im Bereich der seitlichen Begrenzungen angeordnete, in Vertiefungen im Kopfstück eingreifende Vorsprünge vorgesehen sein.

Bei dem mit der Hülse versehenen Ausführungsbeispiel des erfindungsgemäßen Dübels muß die Hülse—wie erwähnt—relativ genau an die vorgesehene Tiefe der Hinterschnittfläche sowie die Dicke des Werkstücks angepaßt sein. Weniger kritisch in dieser Hinsicht ist eine Weiterbildung, bei der die Hülse unter Wirkung von Axialkräften um ein gewisses Maß axial verformbar ausgebildet ist. Eine zu lang bemessene Hülse wird dann einfach durch Anziehen des Befestigungskopfes bzw. der Mutter um das erforderliche Maß zusätzlich in Axialrichtung zusammengedrückt.

Im enfachsten Fall weist die Hülse Hierfür wenigstens eine ihre Wandstärke schwächende radiale Ausdrehung auf, in deren Bereich die restliche Hülsenwandstärke so gering ist, daß sie in der erforderlichen Weise verformt werden kann.

Alternativ kann zwischen der Hülse und dem am Befestigungsbolzen vorgesehenen Schraubenkopf bzw. der Mutter ein in Axialrichtung zusammendrückbares Ringelement vorgesehen sein.

Die Erfindung ist in der folgenden Beschreibung zweier Ausführungsbeispiele in Verbindung mit der Zeichnung näher erläutert, und zwar zeigt:

Fig. 1 eine Schnittansicht durch ein erstes Ausführungsbeispiel einer erfindungsgemäßen Befestigungsanordnung, die einen in eine mit einem Hinterschnitt Versehene Bohrung eingesetzten Dübel in unverriegeltem Zustand zeigt, wobei die Verriegelungsstellung der Riegelelemente strichpunktiert angedeutet ist;

Fig. 2 eine perspektivische Explosionsdarstellung des Kopfstücks und der Riegelemente des in Fig. 1 gezeigten Dübels;

Fig. 3 eine der Fig. 1 entsprechende Schnittansicht durch ein zweites Ausführungsbeispiel einer erfindungsgemäßen Befestigungsanordnung; und

Fig. 4 eine Seitenansicht des Befestigungsbolzens des Dübels der Befestigungsanordnung gemäß Fig. 3.

Der in Fig. gezeigte, in seiner Gesamtheit mit 10 bezeichnete erfindungsgemäße soll formschlüssig in einer Bohrung 12 gesetzt—d.h. verriegelt—werden, die sich aus einer zylindrischen vorbohrung 14 und einer mit Abstand von der Mündung der Bohrung vorgesehenen Erweiterungsbohrung 16 mit einer rückwärts zur Bohrungsmündung gewandten Hinterschnittfläche 17 zusammensetzt.

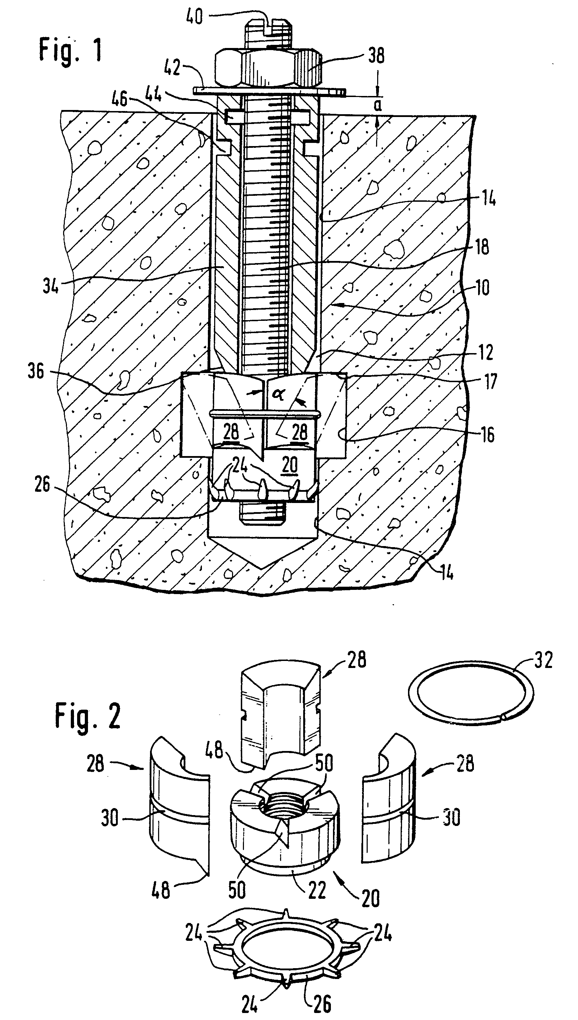

Der Dübel 10 weist einen langgestreckten, im gezeigten Fall ein durchgehendes Gewinde tragenden Befestigungsbolzen 18 auf, auf dessen bohrungsinnerem Ende ein im Durchmesser nur geringfügig kleiner als der Durchmesser der Vorbohrung 14 bemessenes Kopfstück 20 aufgeschraubt ist. Der Befestigungsbolzen 18 ist also durch Drehen in das Kopfstück 20 hinein und aus ihm Herausschraubbar. Das Kopfstück trägt in seinem bohrungsinneren Endbereich eine Drehsicherung in Form eines auf einer Eindrehung 22 gehaltenen, mit radial über den Durchmesser der Vorbohrung vorspringenden Haltekrallen 24 versehenen Rings 26. Der Ring 26 ist zweckmäßigerweise einstückig mit den Haltekrallen 24 aus Kunstoff gespritzt, kann jedoch auch aus federelastischem Metall hergestellt sein. Beim Einführen des Dübels 10 werden die Haltekrallen 24 entgegen der Einschubrichtung rückwärts umgebogen, so daß das Einführen des Dübels in die Bohrung 12 nicht behindert wird. Einer Drehung des Kopfstücks 20 in Umfangsrichtung beim Eindrehen des Befestigungsbolzens 18 setzen die an der rauhen Bohrungswandung anliegenden Krallen aber einen hinreichenden Widerstand entgegen, um zu verhindern, daß das Kopfstück sich mitdreht. Auf der rückwärts, d.h. zur Bohrungsmündung gewandten Stirnfläche des Kopfstücks 20 sind drei Riegelelemente 28 in gleichmäßigen Winkelabständen um den Befestigungsbolzen herum verteilt abgestützt, die in der in Fig. 1 gezeigten Einführlage zusammengenommen die Form einer dickwandigen Hülse haben, die aber duch drei in Längsrichtung verlaufende Axialschnitte in die drei Riegelelemente 28 unterteilt ist. Ein in eine radial in die Außenfläche der Riegelelemente 28 eingestochene Nut 30 eingelegter elastisch aufweitbarer Ring 32 hält die Riegelelemente in der gezeigten Hülsenform zusammen. Die Riegelelemente sind dabei in der Dicke so bemessen, daß die in der Einführlage von ihnen gebildete Hülse einen etwas kleineren Durchmesser als die Bohrung hat und eventuell auch noch geringfügig kleiner als der Durchmesser des Kopfstücks ist, so daß sichergestellt ist, daß die Riegelelemente 28 beim Einführen in die Bohrung 12 keinesfalls an einer Kante oder einem Vorsprung Hängen bleiben können.

Im Anschluß an die Riegelelement 32 ist eine langgestreckte Hülse 34 lose auf dem Befestigungsbolzen 18 aufgeschoben, deren Bohrungsinneres Ende 36 sich konisch verjüngt, so daß bei einem axialen Anziehen des Kopfstücks in Richtung zur Bohrungsmündung die Riegelelemente 28 auf dem konischen Hülsenende auflaufen und unter Aufweitung des Rings 32 in die in strichpunktierten Linien veranschaulichten Lage radial verschwenkt werden. Die rückwärts weisenden Stirnflächen der Riegelelemente 28 werden also auf den Durchmesser der Hinterschnittfläche 17 aufgeweitet und verriegein den Dübel 10 formschlüssig an der Hinterschnittfläche.

Es ist ersichtlich, daß die durch den Winkel $\alpha$ veranschaulichte erforderliche Verschwenkung der Riegelelemente 28 einem bestimmten Anzugsweg a des Kopfstücks 20 entspricht. Weiter ist der Fig. 1 zu entnehmen, daß einer bestimmten Bohrung 12 mit definierter Tiefe der Hinterschnittfläche eine bestimmte Länge der Hülse 34 zugeordnet ist, und zwar ist diese Länge gleich dem Abstand der Hinterschnittfläche 17 von der Bohrungsmündung zuzüglich der Dicke eines (nicht gezeigten) Werkstücks und zuzüglich dem von der Konizität des Hülsenendes abhängenden erforderlichen Ansugsmaß a zum Ausschwenken der Riegelelemente.

Die Hülse 34 ist durch die auf das äußere Ende des Befestigungsbolzens 18 aufgeschraubte Mutter 38 abgestützt, wobei mit einem in einen in der äußeren Stirnfläche des Befestigungsbolzens 18 vorgesehenen Schraubenzieherschlitz 40 eingesetzten Schraubenzieher das Mitdrehen des Befestigungsbolzens beim Drehen der Mutter 38 verhindert werden kann. Die zwischen der Mutter 38 under der Hülse 34 gezeigt Unterlegscheibe 42 überträgt die Einspannkraft auf die Oberfläche des zu befestigenden Werkstücks.

In Fig. 1 ist der Anzugsweg a, um den das Kopstück 20 axial auf das sich konisch verjüngende Ende 36 der Hülse 34 auflaufen muß, um die erforderliche Ausschwenkung der Riegelelemente 28 zu bewirken, aus Gründen Besserer Übersichtlichkeit als Spalt zwischen der Unterlegscheibe 42 und der Oberfläche des Untergrundes dargestellt, in welchem der Dübel 10 befestigt werden soll. In Wirklichkeit ist es natürlich so, daß der Dübel 10 bis zur Anlage der Unterlegscheibe 42 an den Untergrund in die Bohrung 12 eingeschoben wird und das Kopfstück sich beim Anziehen der Mutter 38 um das Maß a in Richtung auf die Bohrungsmündung verschiebt.

Da der Befestigungsbolzen 18 im gezeigten Fall auch mit dem Kopfstück 20 in Gewindeeingriff steht, kann die Mutter 38 auch durch einen am Befestigungsbolzen fest angestauchten Schraubenkopf ersetzt werden. Der Anzug des Kopfstücks 20 wird dann durch Einschrauben des Befestigungsbolzens in das Kopfstück bewirkt. Andererseits könnte das Kopfstück auch einstückig am inneren Ende des Befestigungsbolzens angestaucht sein. Dann muß der Anzug des Kopfstücks 20 aber in jedem Falle mit einer auf das äußere Ende des Befestigungsbolzen aufgeschraubten und an der Hülse 34 abgestützten Mutter erfolgen.

Die Länge der Hülse muß—wie erwähntrelativ genau in Abhängigkeit von der Tiefe der Hinterschnittfläche in der Vorbohrung und der Werkstückdicke bemessen sein. Eine Vergrößerung der Toleranz dieser Bemessung wird durch die im oberen Endbereich der Hülse gezeigten radialen Ausdrehungen 44 und 46 bewirkt. Diese Ausdrehungen sind so tief, daß die Wandstärke des verbleibenden Hülsenteils bei starkem Anziehen der Mutter—bzw. eines ge-gebenenfalls vorgesehenen Schraubenkopfs—in Axialrichtung verformbar ist, d.h. die wirksame Länge der Hülse kann verkürzt werden. Dies ist nicht nur dann von Vorteil, wenn die Hülse von Anfang an Bezüglich der Tiefe der Hinterschnittfläche in der Bohrung versehentlich zu lang bemessen ist, sondern erlaubt auch den Ausgleich von Unebenheiten an der Hinterschnittfläche sowie ein Nachspannen der Dübelbefestigung, wenn sie beispielsweise beim Ausbrechen eines Steinchens aus der Hinterschnittfläche lose geworden ist. Eine (nicht gezeigte) Alternative zu den Ausdrehungen der Hülse ist die Anordnung eines in Axialrichtung zusammendrückbaren Ringes bzw. einer zweiten zusammendrückbaren Hülse zwischen der Unterlegscheibe 42 und der Hülse 34.

In Fig. 2 sind das Kopfstück 20 mit dem als Verdrehsicherung wirkenden Ring 26 und die Riegelelemente 28 sowie der sie zusammenhaltende aufweitbare Ring 32 zur besseren Ver-anschaulichung noch in einer auseinandergezo-genen perspektivischen Darstellung gezeigt. Es ist erkennbar, daß jedes Riegelelemente einen seitlich von seiner unteren Stirnfläche vor-springenden zugespitzten Vorsprung 48 auf-weist, der in eine entsprechende Ausnehmung 50 in der mündungsseitigen Stirnfläche des Kopfstücks 20 eingreift. Eine Verdrehung der Riegelelemente relativ zum Kopfstück wird so verhindert. Anstelle bloss eines einzigen mit einer Ausnehmung im Kopfstück zusammen-wirkenden Vorsprungs kann jedes Riegel-element auch mit zwei solchen Vorsprüngen versehen sein. Der Vorsprung kann auch abweichend von der gezeigten seitlichen Anordnung im Mittelbereich des Riegelelements angeordnet sein. Weiter ist erkennbar, daß die Stirnflächen der Riegelelemente so geneigt sind, daß sie in der ausgeschwenkten Verriegelungslage satt, d.h. großflächig auf der Stirnfläche des Kopfstücks bzw. der Hinterschnittfläche 17 abgestützt sind. Der in die Nut 30 der Riegelelemente 28 einsetzbare Ring 32 ist im dargestellten Fall ein geschlitzter Ring aus Federstahldraht. Alternativ kann jedoch auch ein geschlossener Ring aus gummielastischem Material Verwendet werden.

Der mittels der Haltekrallen 24 gegen ungewollte Verdrehung des Kopfstücks 20 wirkende Ring 26 wird im dargestallten Fall durch Bemessung seines lichten Durchmessers mit entsprechendem Untermaß unter Spannung auf der Eindrehung 22 kraftschlüssig gehalten. Erforderlichenfalls kann jedoch auch eine formschlüssige Halterung des Rings 26 auf dem Kopfstück 20 vorgenommen werden, indem am Ring beispielsweise ein radial nach innen weisender Vorsprung angespritzt wird, dem eine entsprechende Vertiefung in der Eindrehung zugeordnet wird.

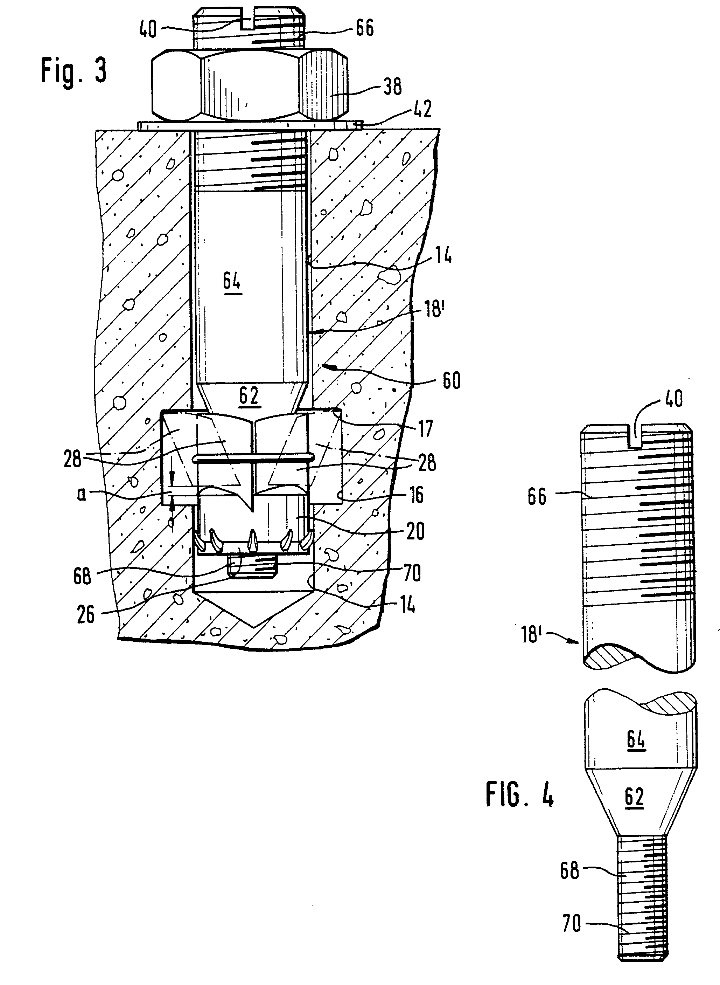

Bei dem in Fig. 3 gezeigten abgewandelten Dübel 60 sind mit dem Dübel 10 übereinstimmende Teile gleicher Funktion mit denselben Besugszeichen bezeichnet. Bezüglich solcher übereinstimmender Teile genügt es also, auf die vorstehende Beschreibung dieses Dübels 10 zu verweisen. Der Dübel 60 unterscheidet sich vom Dübel 10 hauptsächlich dadurch, daß keine der Hülse 34 entsprechende Hülse aufweist. Der zum Spreizen der Riegelelemente eforderliche Konus 62 ist vielmehr in den Befestigungsbolzen 18' integriert und der sich am bohrungsmündungsseitigen Ende des Konus 62 anschließende Schaftabschnitt 64 hat demzufolge einen dem Außendurchmesser der Hülse 34 entsprechenden Durchmesser.

Dadurch wird der Schaftabschnitt 64 relativ stark, wodurch er besonders geeignet zur aufnahme hoher Scherbeanspruchungen ist.

Infolge der größeren Dicke des Befestigungsbolzens 68 im Bereich des Schafts 64 wird das Gewinde 66 für die Mutter 38 und diese selbst entsprechend stärker, während der am verjüngten Ende des Konus 62 angesetzte Schaftabschnitt 68 (Fig. 4) des Befestigungsbolzens 18' ein dem Gewinde des Befestigungsbolzen 18 des Dübels 10 entsprechendes Gewinde 70 aufweist.

**Patentansprüche**

1. Dübel zur formschlüssigen Befestigung (10; 60) in einer Bohrung in einem Untergrund, wobei die als zylindrische Sackbohrung ausgeführte Bohrung (14) mit Abstand von ihrer Mündung im Untergrund mit einer eine Hinterschnittfläche (17) aufweisenden Erweiterung versehen ist, und der Dübel (10; 60) ein dem Durchmesser der Bohrung (14) im wesentlichen entsprechendes, in die Bohrung einführbares und am bohrungsinneren Ende eines langgestreckten Befestigungsbolzens (18; 18') angeordnetes Kopfstück (20) relativ geringer Höhe aufweist, auf dem die bohrungsinneren Enden von Riegelelementen (28) schwenkbar gehaltert sind, deren zur Bohrungsmündung rückwärts weisende Enden von einer innerhalb des Durchmessers der Bohrung (14) Liegenden Lage in eine Lage verschwenkbar sind, in welcher sie zumindest teilweise über den Durchmesser des Kopfstücks (20) vorstehen und an der Hinterschnittfläche (17) der Bohrung (14) verriegelnd angreifen, wobei der an seinem äußeren Ende einen Schraubenkopf oder eine auf ein Gewinde des Befestigungsbolzens (18) aufgeschraubte Mutter (38) tragende Befestigungsbolzen (18; 18') einen zwischen die zur Bohrungsmündung weisenden Enden der Riegelelemente (28) eingreifenden, sich zum Bohrungsinnern konisch verjüngenden Bauteil (36; 62) aufweist, so daß bei einer Verschiebung des Kopfstücks (20) in Richtung zur Bohrungsmündung die zur Bohrungsmündung weisenden Enden der Riegelelemente (28) zwangsläufig radial nach außen verschwenkt werden, dadurch gekennzeichnet, daß sich die Riegelelemente (28) in der nicht ausgeschwenkten Einführstellung zu einer den Befestigungsbolzen (18; 18') umschließenden dickwandigen zylindrischen Hülse ergänzen, und daß das Kopfstück (20) an der Wandung der Bohrung (12) angreifende Einrichtungen (24; 26) zur Verhinderung einer Verdrehung in der Bohrung (12) beim Setzen des Dübels (10; 60) aufweist.

2. Dübel nach Anspruch 1, dadurch gekennzeichnet, daß die die Verdrehung verhindernden Einrichtungen von einem auf einer Eindrehung (22) des Kopfstücks (20) Angeordneten Ring (26) mit sternartig radial von ihm vortretenden elastisch verformbaren Haltekrallen (24) gebildet sind.

3. Dübel nach Anspruch 2, dadurch gekennzeichnet, daß der mit den Haltekrallen (24) versehene Ring (26) aus Kunststoff hergestellt ist.

4. Dübel nach einem der Ansprüche 1 bis 3, dadurch gekennzeichnet, daß der sich konisch verjüngende Bauteil am bohrungsinneren Ende (36) einer langgestreckten, längsverschieblich auf dem Befestigungsbolzen (18) angeordneten Hülse (34) gebildet ist, deren Länge etwa gleich dem Abstand des Hinterschnitts der Bohrung (12) von der Oberseite des zu befestigenden Werkstücks zuzüglich des zum Ausschwenken der Riegelelemente (28) erforderlichen Spannweges (a) bemessen ist.

5. Dübel nach einem der Ansprüche 1 bis 3, dadurch gekennzeichnet, daß der sich konisch verjüngende Bauteil einem konischen Abschnitt (62) des Befestigungsbolzens (18') selbst gebildet ist, und daß der sich an den konischen Abschnitt (62) zur Bohrungsmündung hin anschließende Schaft (64) des Befestigungsbolzens (18') einem im wesentlichen dem Durchmesser der Bohrung (12) entsprechenden bzw. nur geringfügig Kleineren Durchmesser hat.

6. Dübel nach einem der Ansprüche 1 bis 5, dadurch gekennzeichnet, daß der Befestigungsbolzen (18; 18') zumindest an seinem bohrungsinneren Ende mit Gewinde versehen und in ein Komplementäres Gegengewinde des Kopfstücks (20) eingeschraubt ist.

7. Dübel nach einem der Ansprüche 1 bis 6 mit einer Mutter (38) auf dem äußeren Ende des Befestigungsbolzens (18'), dadurch gekennzeichnet, daß die Länge des zum Gewinde der Mutter (38) komplementären gegengewindes (66) auf dem Befestigungsbolzen (18') wenigstens gleich, vorzugsweise größer als der zum Spreizen der Riegelelemente (28) erforderliche Spannweg (a) ist.

8. Dübel nach Anspruch 4 und 7, dadurch gekennzeichnet, daß der Befestigungsbolzen (18) als Gewindebolzen mit über seine Länge durchgehendem Gewinde ausgebildet ist.

9. Dübel nach einem der Ansprüche 1 bis 8, dadurch gekennzeichnet, daß in die der Bohrungswandung zugewandten Außenseiten der Riegelelemente (28) eine umlaufende Radailnut (30) eingestochen ist, in der ein die Riegelelemente (28) in der eingeschwenkten Lage haltender Ring (32) angeordnet ist.

10. Dübel nach einem der Ansprüche 1 bis 9, dadurch gekennzeichnet, daß jedes Riegelelement (28) an seinem im Kopfstück (20) gehalterten Vorderende wenigstens einen Vorsprung (48) aufweist, der in eine passende Vertiefung (50) im Kopfstück (20) eingreift und so eine Verdrehung des Riegelelements (28) relativ zum Kopfstück (20) verhindert.

11. Dübel nach einem der Ansprüche 1 bis 4 und 6 bis 10, dadurch gekennzeichnet, daß die Hülse (34) unter der Wirkung von Axialkräften um ein gewisses Maß axial verformbar ausgebildet ist.

12. Dübel nach Anspruch 11, dadurch gekennzeichnet, daß die Hülse (34) wenigstens eine ihre Wandstärke schwächende radiale Ausdrehung (44; 46) aufweist.

13. Dübel nach einem der Ansprüche 1 bis 4 und 6 bis 10, dadurch gekennzeichnet, daß zwischen der Hülse (34) und dem am Befestigungsbolzen (18) vorgesehenen Schraubenkopf bzw. der Mutter (38) ein in Axialrichtung zusammendrückbares Ringelement vorgesehen ist.

14. Dübel nach einem der Ansprüche 7 bis 13, dadurch gekennzeichnet, daß in der äußeren Stirnfläche des Befestigungsbolzens (18; 18') ein Schraubenzieherschlitz (40) zum Ansetzen eines Schraubenziehers oder dergleichen Werkzeug vorgesehen ist.

## Claims

1. Toggle (10; 60) for positive connection in a bore in a base, in which the bore (14) is a cylindrical blind bore provided with a widening at a distance from its mouth in the base with an undercut surface (17), the toggle (10; 60) having a head piece (20) of relatively low height, essentially corresponding to the diameter of the bore (14), adapted to be introduced into the bore and arranged at the bore-internal end of an elongated connecting bolt (18; 18'); on which head piece the bore-internal ends of locking elements (28) are pivotally held and the ends of which pointing backwards towards the bore opening are pivotal from a position within the diameter of the bore (14) into a position in which they extend at least partially beyond the diameter of the head piece (20) and engage the undercut surface (17) of the bore (14) lockingly; the connecting bolt (18; 18') bearing at its outer end a screw head or a nut (38) screwed onto a thread of the connecting bolt (18); said connecting bolt being provided with an element (36; 62) which engages between the ends of the locking elements (28) pointing towards the bore opening and which tapers conically towards the bore interior, so that upon displacement of the head piece (20) in the direction towards the bore opening the ends of the locking elements (28) pointing towards the bore opening are pivoted positively radially outwardly, characterized in that the locking elements (28) in the position in which they are introduced into the bore and are not pivoted outwardly make up a thick-walled cylindrical sleeve enclosing the connecting bolt (18; 18'); and in that the head piece (20) is provided with devices (24; 26) engaging the wall of the bore (12) for preventing a rotation in the bore (12) during setting of the toggle (10; 60).

2. Toggle according to claim 1, characterised in that the devices for preventing the rotation are formed by a ring (26) arranged on an indent (22) on the headpiece (20), and having elastically deformable holding claws (24) which project radially star-like therefrom.

3. Toggle according to claim 2, characterized in that the ring (26) provided with the holding claws (24) is made of synthetic material.

4. Toggle according to one of claims 1 to 3, characterized in that the conically tapering element is formed at the bore-internal end (36) of an elongated longitudinally displaceable sleeve (34) arranged on the connecting bolt (18); the length of the sleeve being approximately equal to the distance of the undercut of the bore (12) from the top side of the work piece to be connected plus the tightening distance (a) required for the pivoting of the locking elements (28).

5. Toggle according to one of claims 1 to 3, characterized in that the conically tapering element is formed by a conical section (62) of the connecting bolt (18') itself, and in that the shaft (64) on the connecting bolt (18') adjacent the conical section (62) towards the bore opening essentially has the diameter of the bore (12) or an only slightly smaller diameter.

6. Toggle according to one of claims 1 to 5, characterized in that the connecting bolt (18; 18') is provided with a thread at least at its bore-internal end and is screwed into a complementary counter-thread of the headpiece (20).

7. Toggle according to one of claims 1 to 6 with a nut (38) on the outer end of the connecting bolt (18'), characterized in that the length of the counter-thread (66) on the connecting bolt (18') complementary to the thread of the nut (38) is at least equal to and preferably larger than the distance (a) necessary for the spreading of the locking elements (28).

8. Toggle according to claims 4 and 7, characterized in that the connecting bolt (18) is designed as a threaded bolt with a thread extending over its entire length.

9. Toggle according to one of claims 1 to 8, characterized in that in the outer walls of the locking elements (28) facing the bore wall a circumferential radial groove (30) is cut in which a ring (32) is arranged which holds the locking elements (28) in their inwardly pivoted position.

10. Toggle according to one of claims 1 to 9, characterized in that each locking element (28) is provided at its front end held in the headpiece (20) with at least one protrusion (48) which engages in a corresponding recess (50) in the headpiece (20) and thus prevents rotation of the locking elements (28) relative to the headpiece (20).

11. Toggle according to one of claims 1 to 4 and 6 to 10, characterized in that the sleeve (34) is designed so as to be axially deformable by a certain amount under the action of axial forces.

12. Toggle according to claim 11, characterized in that the sleeve (34) is provided with at least one radial groove (44; 46) weakening the strength of its wall.

13. Toggle according to one of claims 1 to 4 and 6 to 10, characterized in that between the sleeve (34) and the screw head provided on the connecting bolt (18) or the nut (38) respectively there is provided an annular element compressible in axial direction.

14. Toggle according to one of claims 7 to 13, characterized in that a slot (40) for a screwdriver is provided in the outer end face of the connecting bolt (18; 18') for engagement by a screwdriver or similar tool.

**Revendications**

1. Goujon (10, 60) pour fixation par correspondance de forme dans un trou ménagé dans un support, ce trou (14) étant un trou borgne cylindrique pourvu à une certaine distance de son orifice d'un élargissement présentant une surface en contredépouille (17), et le goujon (10, 60) présentant une pièce de tête (20) de hauteur relativement petite, correspondant sensiblement au diamètre du trou (14), pouvant être introduite dans le trou et placée à l'extrémité, intérieure au trou, d'un boulon de fixation allongé (18, 18'), cette pièce de tête supportant pivotantes les extrémités intérieures au trou d'éléments de verrouillage (28) dont les extrémités arrière dirigées vers l'orifice du trou peuvent basculer d'une position située à l'intérieur du diamètre du trou (14) à une position dans laquelle elles dépassent au moins en partie le diamètre de la pièce de tête (20) et viennent en prise, en produisant un verrouillage, avec la surface en contredépouille (17) du trou (14), le boulon de fixation (18, 18'), portant à son extrémité extérieure une tête de vis ou un écrou (38) vissé sur un filetage prévu sur lui, présentant un élément conique (36, 62) s'amincissant vers l'intérieur du trou et s'engageant entre les extrémités des éléments de verrouillage (28) dirigées vers l'orifice du trou, de sorte que, lorsque la pièce de tête (20) se déplace vers l'orifice du trou, les extrémités des éléments de verrouillage (28) dirigées vers l'orifice du trou basculent radialement vers l'extérieur, caractérisé par le fait que les éléments de verrouillage (28), dans la position d'introduction, non basculés vers l'extérieur, se complètent pour former une douille cylindrique à paroi épaisse entourant le boulon de fixation (18, 18'), et la pièce de tête (20) présente des dispositifs (24, 26) qui viennent en prise avec la paroi du trou (12) afin d'empêcher une rotation dans celui-ci lors de l'assujettissement du goujoun (10, 60).

2. Goujon selon la revendication 1, caractérisé par le fait que les dispositifs que empêchent la rotation sont formés d'un anneau (26) placé dans une gorge (22) de la pièce de tête (20) et pourvu de griffes d'arrêt (24) déformables élastiquement saillant radialement de lui en étoile.

3. Goujon selon la revendication 2, caractérisé par le fait que l'anneau (26) pourvu des griffes d'arrêt (24) est en matière plastique.

4. Goujon selon l'une des revendications 1 à 3, caractérisé par le fait que l'élément conique est formé, à l'extrémité (36) intérieure au trou, d'une douille allongée (34) mobile longitudinalement placée autour du boulon de fixation (18) et dont la longueur est à peu près égale à la distance de la contredépouille du trou (12) à la face supérieure de la pièce à fixer, augmentée de la course de serrage (a) nécessaire au basculement des éléments de verrouillage (28) vers l'extérieur.

5. Goujon selon l'une des revendications 1 à 3, caractérisé par le fait que l'élément conique est formé d-une partie conique (62) du boulon de fixation (18') lui-même, et que la partie de tige (64) du boulon de fixation (18') qui fait suite à cette partie conique (62) vers l'orifice du trou a un diamètre correspondant sensiblement à celui du trou (12) ou légèrement inférieur à lui.

6. Goujon selon l'une des revendications 1 à 5, caractérisé par le fait que le boulon de fixation (18, 18') est pourvu d'un filetage au moins à son extrémité intérieure au trou et est vissé dans un taraudage de la pièce de tête (20).

7. Goujon selon l'une des revendications 1 à 6, comportant un écrou (38) à l'extrémité extérieure du boulon de fixation (18'), caractérisé par le fait que la longueur du filetage (66) complémentaire du taraudage de l'écrou (38) sur le boulon de fixation (18') est au moins égale et de préférence supérieure à la course de serrage (a) nécessaire à l'écartement des éléments de verrouillage (28).

8. Goujon selon les revendications 4 et 7, caractérisé par le fait que le boulon de fixation (18) est fileté sur toute sa longueur.

9. Goujon selon l'une des revendications 1 à 8, caractérisé par le fait que dans la face extérieure, tournée vers la paroi du trou, des éléments de verrouillage (28), est ménagée une gorge circonférentielle (30) dans laquelle est placé un anneau (32) qui tient les éléments de verrouillage (28) basculés vers l'intérieur.

10. Goujon selon l'une des revendications 1 à 9, caractérisé par le fait que chaque élément de verrouillage (28) présente, à son extrémité avant tenue dans la pièce de tête (20), au moins une saillie (48) qui s'engage dans un creux (50) ajusté à elle ménagé dan la pièce de tête (20 et ainsi empêche l'élément de verrouillage (28) de tourner par rapport à la pièce de tête (20).

11. Goujon selon l'une des revendications 1 à 4 et 6 à 10, caractérisé par le fait que la douille (34) a une certaine capacité de déformation axiale sous l'action des forces axiales.

12. Goujon selon la revendication 11, caractérisé par le fait que la douille (34) présente au moins une gorge circonférentielle (44, 46) que affaiblit sa paroi.

13. Goujon selon l'une des revendications 1 à 4 et 6 à 10, caractérisé par le fait qu'entre la douille (34) at la tête de vis ou l'écrou (38) prévu sur le boulon de fixation (18) est prévu un élément annulaire compressible en direction axiale.

14. Goujon selon l'une des revendications 7 à 13, caractérisé par le fait que, dans la face d'extrémité extérieure du boulon de fixation (18, 18'), est prévue une fente (40) pour l'application d'un tournevis ou d'un outil analogue.

**0 002 654**

Fig. 1

Fig. 2

Fig. 3

FIG. 4